# EUROPEAN PATENT APPLICATION

(11) **EP 3 184 471 A1**
(43) Date of publication of application: **28.06.2017**
(21) Application number: 16204994.4
(22) Date of filing: 19.12.2016
(51) Int. Cl.: B65G 17/08, B65G 17/38

(54) **CONVEYOR CHAIN**

(30) Priority: 21.12.2015 GB 201522490
(71) Applicant: Pennine Industrial Equipment Limited, Skelmanthorpe, Huddersfield HD8 9DT (GB)
(72) Inventor: WOMERSLEY, Graham, Huddersfield, West Yorkshire HD8 8ND (GB)
(74) Representative: Stuttard, Garry Philip

(57) **Abstract**

The present invention relates to a multi-link conveyor chain which may be used (for example) in the glass industry with a ceramic-coated link insert for use in the multi-link conveyor chain.

## Description

The present invention relates to a multi-link conveyor chain which may be used (for example) in the glass industry and to a ceramic-coated link insert for use in the multi-link conveyor chain.

Multi-link conveyor chains are in widespread use in the glass industry for transporting glass products between processing stations. For example, a multi-link conveyor chain which is typically 100 feet long may be used to transport blown glass from a blowing station to an annealing station. A multi-link conveyor chain may be used to transport small glassware such as perfume bottles, wine glasses, pharmaceutical glassware and decorated medicine bottles.

In one conventional multi-link conveyor chain, there is a plurality of parallel spaced apart elongate pins having an oval-shaped cross-section. Mounted on adjacent elongate pins are a series of link plates spaced apart along the pin by a plurality of washers, each link plate comprising a first and a second link. Each of the first and second links is capable of engaging a drive sprocket and has an oval-shaped aperture for receiving the elongate pin. The multi-link conveyor chain is driven by the engagement of the links of the link plate with the multiple teeth of a drive sprocket during a cycle of engagement. The conventional multi-link conveyor chain is assembled so that each end of the elongate pin extends beyond the outermost link plate (*ie* beyond the edge of the flat conveyor surface) and a pin head is fixed to each exposed end. Each end of the elongate pin is secured in a protective retaining enclosure (*eg* a head protector) that has a countersink to accommodate a pin head such that the pin head does not protrude from the retaining enclosure. One such arrangement is described in EP-A-1241117.

A disadvantage of the conventional multi-link conveyor chain for use in the glass industry is that heat drawn from the hot glass by the conveyor surface can lead to rapid cooling and cause damage to the glass article.

The present invention seeks to improve the lateral transfer of hot articles (*eg* glassware) on a multi-link conveyor chain by incorporating a plurality of ceramic-coated link inserts.

Thus viewed from one aspect the present invention provides a multi-link conveyor chain adapted to provide a substantially flat horizontal running surface driveable between a first processing station and a second processing station by engagement with a drive sprocket, said multi-link conveyor chain comprising:
a plurality of elongate pin assemblies spaced apart in substantially parallel relationship consisting of multiple triplets of elongate pin assemblies being a first elongate pin assembly adjacent to a second elongate pin assembly adjacent to a third elongate pin assembly,
   wherein the first elongate pin assembly has a first end extending beyond a first edge of the substantially flat horizontal surface and a second end extending beyond a second edge of the substantially flat horizontal surface,
   wherein the second elongate pin assembly has a first end extending beyond a first edge of the substantially flat horizontal surface and a second end extending beyond a second edge of the substantially flat horizontal surface,
   wherein the third elongate pin assembly has a first end extending beyond the first edge of the substantially flat horizontal surface and a second end extending beyond the second edge of the substantially flat horizontal surface;
a first plurality of substantially planar link plates, wherein each of the first substantially planar link plates has a first link connected to a second link by a connecting portion, wherein each of the first link and the second link has a main body and a circumferentially dependent sprocket engaging member, wherein the main body defines an aperture whose shape essentially matches the section of an elongate pin assembly whereby the first plurality of substantially planar link plates are consecutively mounted interdigitally in a staggered relationship on the triplets of elongate pin assemblies;
a second plurality of substantially planar link plates laterally spaced apart from the first plurality of substantially planar link plates, wherein each of the second substantially planar link plates has a first link connected to a second link by a connecting portion, wherein each of the first link and the second link has a main body and a circumferentially dependent sprocket engaging member, wherein the main body defines an aperture whose shape essentially matches the section of an elongate pin assembly whereby the second plurality of substantially planar link plates are consecutively mounted interdigitally in a staggered relationship on the triplets of elongate pin assemblies;
a plurality of ceramic-coated link inserts positioned in the lateral spacing between the first plurality of substantially planar link plates and the second plurality of substantially planar link plates, wherein each ceramic-coated link insert has a main body defining a first aperture and a second aperture, wherein the shape of each of the first aperture and second aperture essentially matches the section of an elongate pin assembly whereby the plurality of ceramic-coated link inserts is consecutively mounted interdigitally in a staggered relationship on the triplets of elongate pin assemblies so as to provide a ceramic-coated portion of the flat horizontal running surface on which is supportable an article to be conveyed;
a plurality of first retaining members mutually spaced apart at the first edge of the substantially flat horizontal surface so as to receive the first end of each of the plurality of elongate pin assemblies, wherein each of the first retaining members comprises a main body defining a first aperture and a second aperture, wherein the shape of each of the first aperture and second aperture essentially matches the section of an elongate pin assembly whereby the plurality of first retaining members includes a first retaining member mounted on the first elongate pin assembly and the second elongate pin assembly;
a plurality of second retaining members mutually spaced apart at the second edge of the substantially flat horizontal surface so as to receive the second end of each of the plurality of elongate pin assemblies, wherein each of the second retaining members comprises a main body defining a third aperture and a fourth aperture, wherein the shape of each of the third aperture and fourth aperture essentially matches the section of an elongate pin assembly whereby the plurality of second retaining members includes a second retaining member mounted on the first elongate pin assembly and the second elongate pin assembly;
a first pin head secured to and retaining the first end of the first elongate pin assembly in the first aperture of the first retaining member;
a second pin head secured to and retaining the first end of the second elongate pin assembly in the second aperture of the first retaining member;
a third pin head secured to and retaining the second end of the first elongate pin assembly in the third aperture of the second retaining member; and
a fourth pin head secured to and retaining the second end of the second elongate pin assembly in the fourth aperture of the second retaining member.

The present invention advantageously exploits the thermal properties of the ceramic to withstand any damage to a hot article (eg glassware) whilst it is conveyed between the first processing station and the second processing station.

Typically the first elongate pin assembly, second elongate pin assembly and third elongate pin assembly are identical. References to "elongate pin assembly" herein are intended to be a reference to any of the first elongate pin assembly, second elongate pin assembly and third elongate pin assembly.

The elongate pin assembly may be an elongate dual pin. The elongate dual pin may have a first elongate pin and a second elongate pin. Each of the first elongate pin and second elongate pin may have a substantially C-shaped section, substantially triangular-shaped section (eg radiussed triangular-shaped section), substantially rectangular-shaped section (*eg* radiussed rectangular-shaped section) or substantially trapezoidal-shaped section.

Preferably the elongate pin assembly is an elongate single pin. The elongate single pin may have a substantially cylindrical shape.

Preferably the elongate pin assembly has a non-circular section. Particularly preferably the non-circular section of the elongate pin assembly is substantially elliptical (or oval).

Preferably each of the first aperture and second aperture of the ceramic-coated link insert is a non-circular aperture whose shape essentially matches the non-circular section of an elongate pin assembly.

Preferably each of the first aperture and second aperture of the ceramic-coated link insert is an aperture (*eg* a non-circular aperture) whose shape non-identically matches the section (*eg* non-circular section) of the elongate pin assembly.

Each of the first aperture and second aperture of the ceramic-coated link insert may be elliptical or rounded rectangular.

In a preferred embodiment, the main body of the ceramic-coated link insert has a substantially trapezoidal section. For example, the main body has a first side substantially parallel to a second side, wherein the second side is longer than the first side and has rounded corners. Preferably the first side has rounded corners (typically to a lesser extent than the second side). The ceramic-coated link insert may be ceramic-coated on the second side (*eg* substantially only on the second side). In use, the ceramic-coated link insert is positioned with the second side uppermost.

The ceramic may be selected according to desired thermal properties and coated according to processes familiar to those skilled in the art. The ceramic may be an aluminium oxide-based ceramic.

Some or (preferably) all of the ceramic-coated link inserts may be laterally spaced apart by a spacer. The main body of the spacer may define a circular or non-circular aperture. In a preferred embodiment of the invention, each spacer comprises a main body defining a non-circular aperture for receiving the elongate pin assembly whose shape essentially matches the non-circular section of the elongate pin assembly. The spacer may be sized and configured so as to have a maximum radial extent which is equal to or less than the ceramic-coated link inserts. This ensures that the spacer does not interfere with the substantially flat horizontal running surface.

Typically the first retaining member and second retaining member are identical. References to "retaining member" herein are intended to be a reference to either or both of the first retaining member and second retaining member.

In a preferred embodiment, the main body of the retaining member has a substantially trapezoidal section. For example, the main body has a first side substantially parallel to a second side, wherein the second side is longer than the first side and has rounded corners. Preferably the first side has rounded corners (typically to a lesser extent than the second side). In use, the first retaining enclosure is positioned at the first edge with the second side uppermost. In use, the second retaining enclosure is positioned at the second edge with the second side uppermost.

The retaining member may be sized and configured so as to have a maximum radial extent which is equal to or less than the link plates. This ensures that the retaining member does not interfere with the substantially flat horizontal running surface.

Preferably the main body of the first retaining member defines a first non-circular aperture and a second non-circular aperture, wherein the shape of the first and second non-circular aperture essentially matches the non-circular section of the first elongate pin assembly and second elongate pin assembly respectively.

Preferably the main body of the second retaining member defines a third non-circular aperture and a fourth non-circular aperture, wherein the shape of the third and fourth non-circular aperture essentially matches the non-circular section of the first elongate pin assembly and second elongate pin assembly respectively.

The plurality of first retaining members may be a plurality of first retaining plates and the plurality of second retaining members may be a plurality of second retaining plates.

The plurality of first retaining members may be a plurality of first retaining enclosures and the plurality of second retaining members may be a plurality of second retaining enclosures.

In the plurality of first retaining enclosures, the depth of each of the first aperture and second aperture is sufficient to enclose the first end of an elongate pin assembly. The first pin head may be seated in a counterbore of the first aperture. The second pin head may be seated in a counterbore of the second aperture.

In the plurality of second retaining enclosures, the depth of each of the third aperture and fourth aperture is sufficient to enclose the second end of an elongate pin assembly. The third pin head may be seated in a counterbore of the third aperture. The fourth pin head may be seated in a counterbore of the fourth aperture.

The rear face of the main body may be recessed (*eg* with a substantially U-shaped recess). The first (shorter) side may be closed or open. Where the first side is open, the main body adopts a twin flat-edged, substantially teardrop profile.

Preferably the shorter side is open. A retaining enclosure in which the shorter side is open is particularly useful in centre guide conveyor chains.

Preferably the shorter side is closed and the rear face is recessed. A retaining enclosure in which the shorter side is closed and the rear face is recessed is particularly useful in side guide conveyor chains.

Preferably the shorter side is closed and the rear face is non-recessed. A retaining enclosure in which the shorter side is closed and the rear face is non-recessed is particularly useful in multi-guide conveyor chains.

Preferably the counterbore is a non-tapered counterbore. Particularly preferably the non-tapered counterbore is substantially cylindrical. Particularly preferably the non-tapered counterbore is a flat recess. Particularly preferably the ratio of the depth of the non-tapered counterbore to the thickness of the retaining enclosure is in the range 0.58 to 0.75, particularly preferably 0.58 to 0.70. Particularly preferably the depth of the non-tapered counterbore is 3.5mm or more, particularly preferably 4.5mm or more, more preferably 6mm or more.

The first, second, third and fourth pin heads may be flat. The first, second, third and fourth flat pin heads may be spin riveted (*eg* eccentrically spin riveted) flat pin heads or laser-headed. The pin heads may be fully encapsulated within the counterbore.

Preferably the main body of each of the first link and second link of the link plate defines a non-circular aperture whose shape essentially matches the non-circular section of an elongate pin assembly.

Preferably the main body of each of the first and the second link of the link plate defines an aperture (*eg* a non-circular aperture) whose shape non-identically matches the section (*eg* non-circular section) of the elongate pin assembly. The non-identical match between the section of the elongate pin assembly and the shape of the aperture defined by the main body of the link causes the link plate to be advantageously driven by the elongate pin assembly throughout the cycle of engagement with the drive sprocket.

In a preferred embodiment, the circumferentially dependent sprocket engaging member of each of the first link and second link of the link plate is substantially flat-edged. Preferably each of the first link and second link of the link plate has a flat-edged, substantially teardrop profile.

Some or all of the link plates may be spaced apart by one or more link spacers. The main body of the link spacer may define a circular or non-circular aperture. In a preferred embodiment of the invention, each link spacer comprises a main body defining a non-circular aperture for receiving the elongate pin assembly whose shape essentially matches the non-circular section of the elongate pin assembly. The link spacer may be sized and configured so as to have a maximum radial extent which is equal to or less than the link plates. This ensures that the link spacer does not interfere with the substantially flat horizontal running surface.

Preferably the non-circular aperture defined by the main body of each of the first link and second link is substantially elliptical (or oval) with an enlarged side portion.

Particularly preferably the enlarged side portion extends inwardly towards the connecting portion.

The multi-link conveyor chain of the invention is suitable for use in any industry which desires transportation between a first and a second station. For example, the multi-link conveyor chain of the invention could be used to transport automotive parts in the automotive industry.

Viewed from a further aspect the present invention provides a ceramic-coated link insert as hereinbefore defined.

The present invention will now be described in a non-limitative sense with reference to the accompanying Figures in which:
Figure 1 illustrates an embodiment of the multi-link conveyor chain of the invention from above;
Figure 2 illustrates the embodiment of the multi-link conveyor chain from beneath; and
Figure 3 illustrates in isolation a ceramic-coated link insert according to the embodiment of the invention.

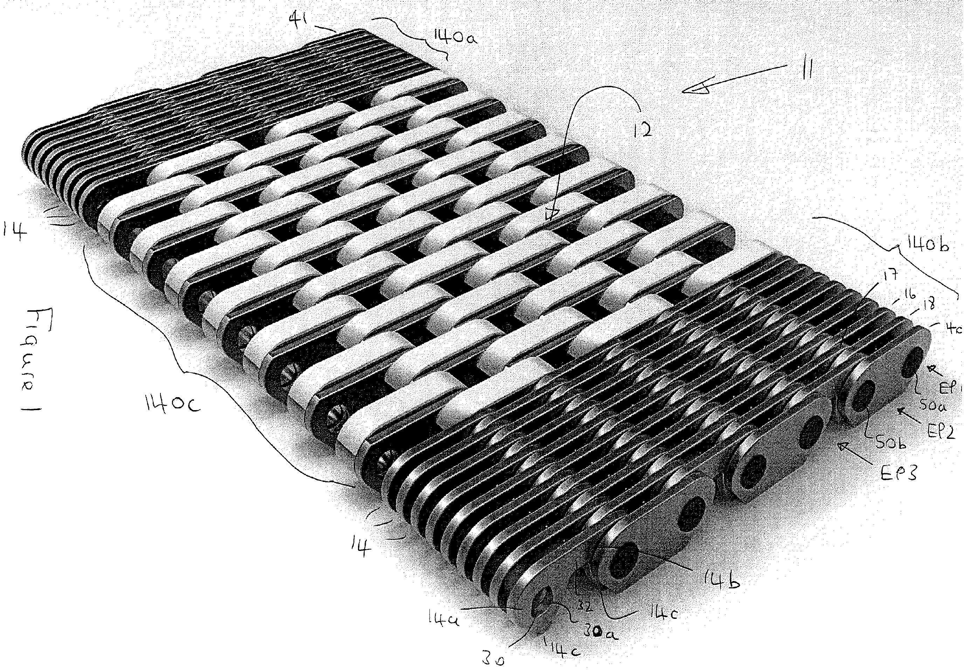

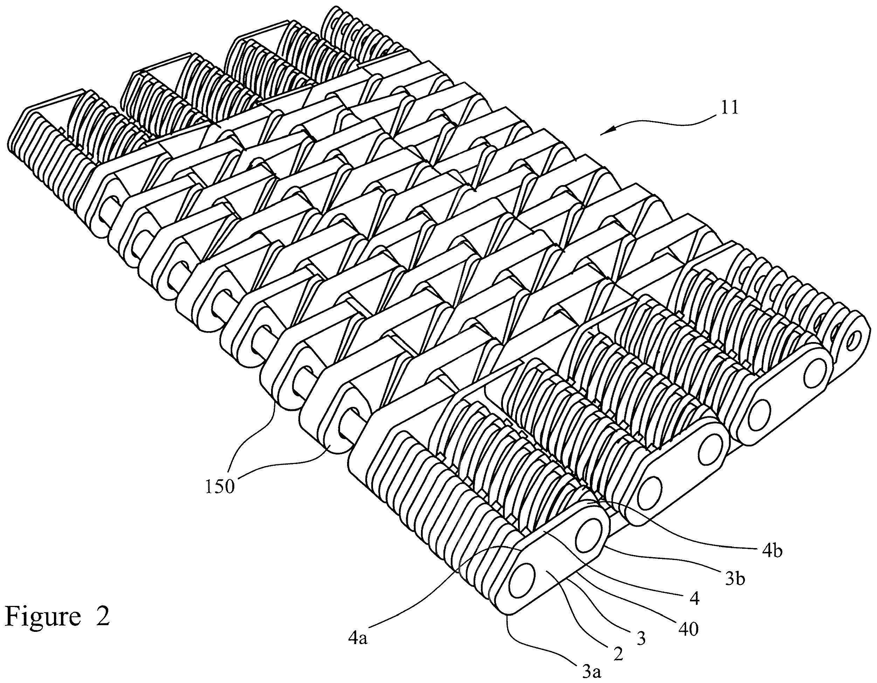

Figures 1 and 2 illustrate from above and beneath respectively an embodiment of the multi-link conveyor chain of the invention designated generally by reference numeral 11.

The multi-link conveyor chain 11 provides a flat horizontal running surface 12 upon which may be conveyed articles such as glass bottles to a processing station. The multi-link conveyor chain 11 comprises a plurality of elongate single pins of elliptical section upon which are mounted a plurality of link plates 14. Consecutive link plates (16, 17 and 18 for example) are mounted interdigitally in a staggered fashion along one of the triplets of elongate single pins (for example a first elongate single pin which is hidden but extends in direction EP1, second elongate single pin which is hidden but extends in direction EP2 and third elongate single pin which is hidden but extends in direction EP3) which together constitute the plurality of elongate single pins.

Each of the plurality of link plates 14 has twin links 14a, 14b having a substantially teardrop profile which extends into a flat-edged, sprocket engaging tooth 14c. Each link 14a, 14b is connected by a connecting portion 32. A non-circular aperture 30 in each of links 14a, 14b non-identically matches the elliptical section of an elongate single pin. The aperture 30 is substantially elliptical with an enlarged side portion 30a extending inwardly towards connecting portion 32.

The plurality of link plates 14 are separated into a first plurality of link plates 140a and a second plurality of link plates 140b laterally spaced apart from the first plurality of link plates 140a.

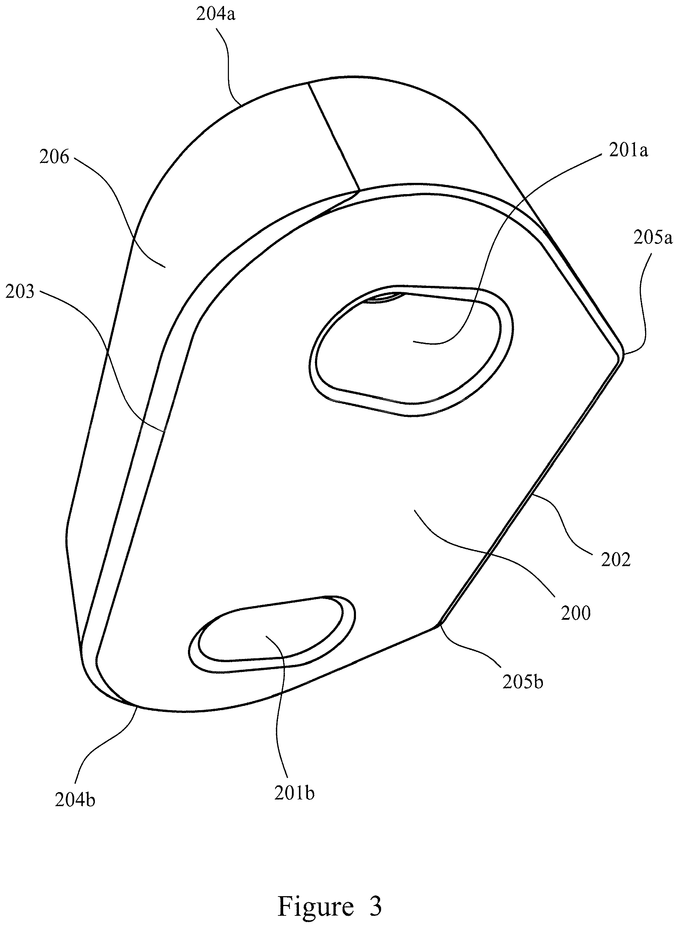

A plurality of ceramic-coated link inserts 140c (described in detail below with reference to Figure 3) is positioned in the lateral spacing between the first plurality of link plates 140a and the second plurality of link plates 140b. The plurality of ceramic-coated link inserts 140c provides a portion of the flat running surface 12 which is ceramic-coated with desirable thermal properties for conveying hot glassware.

Each of the plurality of ceramic-coated link inserts 140c is laterally spaced apart by a spacer 150. The spacer 150 is substantially identical to the link plates 140 but is sized and configured so as to have a lower radial extent than the ceramic-coated link inserts 140c.

The first plurality of link plates 140a and second plurality of link plates 140b are driven by engagement with drive sprockets which are suitably designed and positioned to avoid contact with the ceramic-coated link inserts 140c.

A second retaining plate 40 of a plurality of identical mutually spaced apart second retaining plates is positioned at the second edge of the flat horizontal running surface 12. The second retaining plate 40 comprises a trapezoidal main body 2 having a long side 3 parallel to a closed short side 4. The corners 3a and 3b of the long side 3 are rounded off (and to a lesser extent so are the corners 4a and 4b of the short side 4). The main body 2 defines a first elliptical aperture and a second elliptical aperture. The second retaining plate 40 is mounted on the first elongate single pin EP1 and the second elongate single pin EP2.

A first retaining plate 41 of a plurality of identical mutually spaced apart first retaining plates is positioned at the first edge of the flat horizontal running surface 12. The first retaining plate 41 is mounted on the first elongate single pin EP1 and the second elongate single pin EP2 and is identical to the second retaining plate 40.

To assemble the multi-link conveyor chain 11 of Figure 1, the first end of the first elongate single pin EP1 is fitted with a first flat pin head by spin riveting and the first end of the second elongate single pin EP2 is fitted with a second flat pin head by spin riveting. The second end of each of the elongate single pins EP1 and EP2 is inserted into the first and second elliptical apertures of the first retaining plate 41. The pair of elongate single pins EP1 and EP2 passes through the first plurality of link plates 140a, the plurality of ceramic-coated link inserts 140c, the spacers 150 and the second plurality of link plates 140b (including link plates 16, 17 and 18 described above) to a position in which the first flat pin head and second flat pin head abut the first retaining plate 41. The second end of each of the pair of elongate single pins EP1 and EP2 is inserted into the first and second elliptical apertures of the second retaining plate 40. The second end of each of the pair of elongate single pins EP1 and EP2 is retained in the apertures with a third and fourth flat pin head 50a and 50b abutting against the second retaining plate 40.

Figure 3 illustrates the ceramic-coated link insert 140c in isolation. The ceramic-coated link insert 140c has a main body 200 having a substantially trapezoidal section and defining a first substantially elliptical aperture 201a and a second substantially elliptical aperture 201b whose shape essentially matches the non-circular section of an elongate single pin. The main body 200 has a first side 202 substantially parallel to a second side 203 which is longer than the first side 202 and has rounded corners 204a, 204b. The first side 202 has rounded corners 205a, 205b but to a lesser extent than the second side 203. The second side 203 and its rounded corners 204a, 204b are coated with a ceramic 206 according to known procedures.

The ceramic coating is a 98% white alumina ceramic (MK101 from B&B Coatings (Huddersfield) Ltd) which is resistant to abrasion and corrosion and is heat resistant to 1200°C. The ceramic reduces the heat drawn from hot glassware and prevents rapid cooling.

## Claims

1. A multi-link conveyor chain adapted to provide a substantially flat horizontal running surface driveable between a first processing station and a second processing station by engagement with a drive sprocket, said multi-link conveyor chain comprising:
a plurality of elongate pin assemblies spaced apart in substantially parallel relationship consisting of multiple triplets of elongate pin assemblies being a first elongate pin assembly adjacent to a second elongate pin assembly adjacent to a third elongate pin assembly,
wherein the first elongate pin assembly has a first end extending beyond a first edge of the substantially flat horizontal surface and a second end extending beyond a second edge of the substantially flat horizontal surface,
wherein the second elongate pin assembly has a first end extending beyond a first edge of the substantially flat horizontal surface and a second end extending beyond a second edge of the substantially flat horizontal surface,
wherein the third elongate pin assembly has a first end extending beyond the first edge of the substantially flat horizontal surface and a second end extending beyond the second edge of the substantially flat horizontal surface;
a first plurality of substantially planar link plates, wherein each of the first substantially planar link plates has a first link connected to a second link by a connecting portion, wherein each of the first link and the second link has a main body and a circumferentially dependent sprocket engaging member, wherein the main body defines an aperture whose shape essentially matches the section of an elongate pin assembly whereby the first plurality of substantially planar link plates are consecutively mounted interdigitally in a staggered relationship on the triplets of elongate pin assemblies;
a second plurality of substantially planar link plates laterally spaced apart from the first plurality of substantially planar link plates, wherein each of the second substantially planar link plates has a first link connected to a second link by a connecting portion, wherein each of the first link and the second link has a main body and a circumferentially dependent sprocket engaging member, wherein the main body defines an aperture whose shape essentially matches the section of an elongate pin assembly whereby the second plurality of substantially planar link plates are consecutively mounted interdigitally in a staggered relationship on the triplets of elongate pin assemblies;
a plurality of ceramic-coated link inserts positioned in the lateral spacing between the first plurality of substantially planar link plates and the second plurality of substantially planar link plates, wherein each ceramic-coated link insert has a main body defining a first aperture and a second aperture, wherein the shape of each of the first aperture and second aperture essentially matches the section of an elongate pin assembly whereby the plurality of ceramic-coated link inserts is consecutively mounted interdigitally in a staggered relationship on the triplets of elongate pin assemblies so as to provide a ceramic-coated portion of the flat horizontal running surface on which is supportable an article to be conveyed;
a plurality of first retaining members mutually spaced apart at the first edge of the substantially flat horizontal surface so as to receive the first end of each of the plurality of elongate pin assemblies, wherein each of the first retaining members comprises a main body defining a first aperture and a second aperture, wherein the shape of each of the first aperture and second aperture essentially matches the section of an elongate pin assembly whereby the plurality of first retaining members includes a first retaining member mounted on the first elongate pin assembly and the second elongate pin assembly;
a plurality of second retaining members mutually spaced apart at the second edge of the substantially flat horizontal surface so as to receive the second end of each of the plurality of elongate pin assemblies, wherein each of the second retaining members comprises a main body defining a third aperture and a fourth aperture, wherein the shape of each of the third aperture and fourth aperture essentially matches the section of an elongate pin assembly whereby the plurality of second retaining members includes a second retaining member mounted on the first elongate pin assembly and the second elongate pin assembly;
a first pin head secured to and retaining the first end of the first elongate pin assembly in the first aperture of the first retaining member;
a second pin head secured to and retaining the first end of the second elongate pin assembly in the second aperture of the first retaining member;
a third pin head secured to and retaining the second end of the first elongate pin assembly in the third aperture of the second retaining member; and
a fourth pin head secured to and retaining the second end of the second elongate pin assembly in the fourth aperture of the second retaining member.

2. A multi-link conveyor chain as claimed in claim 1 wherein each of the first aperture and second aperture of the ceramic-coated link insert is a non-circular aperture whose shape essentially matches the non-circular section of an elongate pin assembly.

3. A multi-link conveyor chain as claimed in claim 1 or 2 wherein the main body of the ceramic-coated link insert has a substantially trapezoidal section.

4. A multi-link conveyor chain as claimed in any preceding claim wherein the main body of the ceramic-coated link insert has a first side substantially parallel to a second side, wherein the second side is longer than the first side and has rounded corners, wherein the ceramic-coated link insert is ceramic-coated only on the second side.

5. A multi-link conveyor chain as claimed in any preceding claim wherein the main body of the retaining member has a substantially trapezoidal section.

6. A multi-link conveyor chain as claimed in any preceding claim wherein the main body of the retaining member has a first side substantially parallel to a second side, wherein the second side is longer than the first side and has rounded corners.

7. A multi-link conveyor chain as claimed in any preceding claim wherein the main body of the first retaining member defines a first non-circular aperture and a second non-circular aperture, wherein the shape of the first and second non-circular aperture essentially matches the non-circular section of the first elongate pin assembly and second elongate pin assembly respectively.

8. A multi-link conveyor chain as claimed in any preceding claim wherein the main body of the second retaining member defines a third non-circular aperture and a fourth non-circular aperture, wherein the shape of the third and fourth non-circular aperture essentially matches the non-circular section of the first elongate pin assembly and second elongate pin assembly respectively.

9. A multi-link conveyor chain as claimed in any preceding claim wherein the main body of each of the first link and second link of the link plate defines a non-circular aperture whose shape essentially matches the non-circular section of an elongate pin assembly.

10. A multi-link conveyor chain as claimed in any of claims 1 to 8 wherein the main body of each of the first link and second link of the link plate defines an aperture whose shape non-identically matches the section of the elongate pin assembly.

11. A multi-link conveyor chain as claimed in any preceding claim wherein the circumferentially dependent sprocket engaging member of each of the first link and second link of the link plate has a flat-edged, substantially teardrop profile.

12. A multi-link conveyor chain as claimed in claim 9 wherein the non-circular aperture defined by the main body of each of the first link and second link is substantially elliptical or oval with an enlarged side portion.

13. A multi-link conveyor chain as claimed in claim 12 wherein the enlarged side portion extends inwardly towards the connecting portion.

14. A ceramic-coated link insert as defined in any preceding claim.
